# EUROPÄISCHE PATENTSCHRIFT

(11) **EP 3 320 590 B1**
(45) Veröffentlichungstag und Bekanntmachung des Hinweises auf die Patenterteilung: **23.09.2020**
(21) Anmeldenummer: 16787760.4
(22) Anmeldetag: 14.10.2016
(51) Int. Cl.: H02G 3/08, H02G 15/013, B60R 16/02, F16L 5/10

(54) **KABELABDICHTUNG**
CABLE SEAL
GARNITURE D'ÉTANCHÉITÉ DE CÂBLE

(30) Priorität: 15.12.2015 DE 102015121803
(43) Veröffentlichungstag der Anmeldung: 16.05.2018
(73) Patentinhaber: ebm-papst Mulfingen GmbH & Co. KG, 74673 Mulfingen (DE)
(72) Erfinder: HIRSCHLEIN, Nico, 97980 Bad Mergentheim (DE); HOLDERBACH, Christoph, 74722 Buchen (DE); HUFNAGEL, Volker, 91541 Rothenburg o. d. Tbr. (DE)
(74) Vertreter: Staeger & Sperling Partnerschaftsgesellschaft mbB
(86) Internationale Anmeldenummer: PCT/EP2016/074779
(87) Internationale Veröffentlichungsnummer: WO 2017/102135

(56) Entgegenhaltungen:
- EP-A1- 2 835 878
- DE-A1- 10 027 486
- DE-U1-202009 004 735
- FR-A1- 2 786 247
- FR-A1- 2 813 370

## Beschreibung

Die Erfindung betrifft eine Kabelabdichtung, insbesondere für Kabel, die in Gehäuse von Elektrogeräten, beispielsweise Elektromotorgehäuse, eingeführt werden.

Kabelabdichtungen sind aus dem Stand der Technik bekannt. Beispielsweise offenbaren die Gebrauchsmusterschriften DE 20 2011 101 497 U1, DE 20 2009 004 735 U1 und DE 20 2011 109 867 U1 Kabelverschraubungen zur abgedichteten Durchführung von Kabeln. Weiterer relevanter Stand der Technik ist offenbart in den Dokumenten DE 100 27 486 A1, FR 2 813 370 A1, EP 2 835 878 A1 und FR 2 786 247 A1.

Bei Kabelverschraubungen muss zur Sicherstellung der Dichtwirkung und Zugentlastung ein vordefiniertes Drehmoment eingehalten werden, das abhängig ist von der Größe der Einzelteile der Kabelverschraubung sowie dem verwendeten Dichtmittel. Zur Sicherstellung der Verwendung des richtigen Drehmoments müssen Drehmomentschrauber eingesetzt werden, die nicht immer verfügbar sind. Zudem ist der Montage- und Überwachungsaufwand erhöht.

Wenn kein Drehmomentschlüssel verfügbar ist, werden die Kabelverschraubungen häufig nach Gefühl angezogen, wodurch deren einwandfreie Funktion über die Lebenszeit des entsprechend angeschlossenen Bauteils nicht sichergestellt ist.

Der Erfindung liegt deshalb die Aufgabe zugrunde, eine Kabelabdichtung bereitzustellen, deren Dichtposition unabhängig von Werkzeugen eindeutig festgelegt ist und, die einfach zu montieren ist.

Diese Aufgabe wird durch die Merkmalskombination gemäß Patentanspruch 1 gelöst.

Erfindungsgemäß wird eine Kabelabdichtung mit einem Basiselement und einem Steckelement bereitgestellt, die zur Herstellung einer festgelegten Dichtposition zusammensteckbar sind. Durch das Basiselement und das Steckelement verläuft in axialer Richtung eine Kabeldurchführung. Die Kabelabdichtung umfasst zudem zumindest ein Dichtelement, das ausgebildet ist, ein durch die Kabeldurchführung verlaufendes Kabel zu umschließen, und das im zusammengesteckten Zustand zwischen dem Basiselement und dem Steckelement die Kabeldurchführung abdichtend angeordnet ist. Das Steckelement und das Basiselement weisen zusammenwirkende Fixiermittel auf, die das Steckelement und das Basiselement im zusammengesteckten Zustand aneinander in der festgelegten Dichtposition arretieren.

Durch das Aufeinanderstecken von Steckelement und Basiselement in eine festgelegte Dichtposition ist die Montage vereinfacht und ohne Werkzeug möglich. Zudem sind Fehlbedienungen ausgeschlossen, da nur im zusammengesteckten Zustand eine Kabelabdichtung erfolgt und das Steckelement am Basiselement arretiert bleibt. Sollte die festgelegte Dichtposition beim Aufeinanderstecken von Steckelement und Basiselement noch nicht erreicht sein, lösen sich das Steckelement und Basiselement wieder. Man erhält bei der Montage somit eine unmittelbare Rückmeldung, ob die Arretierung korrekt durchgeführt wurde.

In einer günstigen Ausführungsform ist vorgesehen, dass das Basiselement und das Steckelement in der festgelegten Dichtposition in axialer Richtung aufeinander gesteckt wurden und aneinander fixiert sind. Die axiale Richtung verläuft entlang der Kabeldurchführung durch die Kabelabdichtung. Das Steckelement wird axial auf das Basiselement gesteckt, bis es in der festgelegten Dichtposition hält. Die vorgesehenen Fixiermittel erzeugen eine Fixierung in der festgelegten Dichtposition zwischen dem Basiselement und dem Steckelement nach einer ausschließlich axialen Bewegung des Steckelements gegenüber dem Basiselement. Ein Aufschrauben wie es im Stand der Technik durchgeführt wurde, ist nicht weiter nötig.

Erfindungsgemäß ist eine Ausführung, bei der die an dem Steckelement und dem Basiselement zusammenwirkenden Fixiermittel als Verrastung oder Bajonettverschluss ausgebildet sind. Sowohl eine Verrastung als auch eine Bajonettverbindung bieten die Möglichkeit, eine eindeutig Dichtposition vorzusehen. Dabei bleibt es grundsätzlich offen, an welchem der Bauteile Steckelement oder Basiselement das Vater- bzw. Mutterteil der Verrastung bzw. der Bajonettverbindung ausgebildet wird.

Insbesondere werden in einer günstigen Variante die Fixiermittel durch an dem Basiselement oder dem Steckelement ausgebildete Haken und an dem jeweils anderen Element durch Hakeneingnffsmittel gebildet. Haken können in verschiedene Hakeneingriffsmittel eingreifen, umfassend Öffnungen, Schultern oder Vorsprünge. Beim axialen Zusammenstecken von Steckelement und Basiselement ist die festgelegte Dichtposition dann erreicht, wenn die Haken in Eingriff mit den Hakeneingriffsmitteln stehen.

In einer günstigen Ausführung sind die Hakeneingriffsmittel durch Radialvorsprünge gebildet, die an einem axialen Ende jeweils einen Hinterschnitt zum Eingriff der jeweiligen Haken aufweisen, Dabei ist vorteilhaft, dass die Haken beim Zusammenstecken eine Vorspannung in radialer Richtung erfahren und beim Erreichen der festgelegten Dichtposition an den Radialvorsprüngen einschnappen, d.h. diese hintergreifen, Ein weiteres Zusammendrücken von Steckelement und Basiselement ist zwar grundsätzlich möglich, sobald der Druck jedoch gelöst wird, gleiten das Steckelement und das Basiselement wieder in ihre festgelegte Dichtposition zurück, in der die Haken an den Radialvorsprüngen eingreifend anliegen.

Besonders vorteilhaft wird die Vorspannung der Haken durch rampenförmige Radialvorsprünge erreicht.

In einer Weiterbildung der Kabelabdichtung ist vorgesehen, dass an dem Basiselement eingesenkte Einführkanäle ausgebildet sind, die eine positionsfeste Führung beim Zusammenstecken von Steckelement und Basiselement erzeugen. Insbesondere wird vorgesehen, dass die Haken der Fixiermittel durch komplementäre Formgebung in die eingesenkten Einführkanäle passen, um zum Einen eine festgelegte Steckposition zwischen Steckelement und Basiselement und zum Anderen eine Führung des Steckelements gegenüber dem Basiselement bereitzustellen. Durch die komplementäre Formgebung zwischen Haken und Einführkanälen kann zudem eine Relativrotation zwischen Steckelement und Basiselement beim Durchführen der axialen Steckbewegung der beiden Bauteile verhindert werden.

Erfindungsgemäß weist das Basiselement eine konische Aufnahme für das Dichtelement auf. Das Steckelement umfasst ein das Dichtelement umschließendes elastisches Pressmittel, das ausgebildet ist, im zusammengesteckten Zustand in Wirkverbindung mit der konischen Aufnahme eine konzentrische Flächenpressung auf das Dichtelement auszuüben. Beim Zusammenstecken von Steckelement und Basiselement wird das Pressmittel durch die konische Aufnahme in radialer Richtung zur Mittelachse der Kabeldichtung gedrückt, wobei die konzentrische Flächenpressung zunimmt, je weiter das Steckelement in axialer Richtung auf das Basiselement gedrückt wird. Das Dichtelement weist eine Kabeldurchführungsöffnung auf und ist in radialer Richtung elastisch verpressbar. Im zusammengesteckten Zustand wirken die Pressmittel durch die konische Aufnahme auf das Dichtelement und pressen dieses gegen das hindurchgeführte Kabel sowie gegen axiale Randabschnitte der Steckelements und Basiselements. Die Kabeldurchführung ist somit abgedichtet.

In einer günstigen Ausführungsform ist das Pressmittel als elastische in radialer Richtung bewegliche Arme ausgebildet, die das Dichtelement zumindest abschnittsweise umgreifen und im zusammengesteckten Zustand von der konischen Aufnahme nach radial innen gedrückt werden, um die konzentrische Flächenpressung zu erzeugen. Das Dichtelement kann dabei zur Montage von den Armen umschlossen oder einteilig an diesen ausgebildet sein.

Eine technisch günstige konzentrische Flächenpressung auf das Dichtelement wird mit einer Ausführung der konischen Aufnahme erreicht, bei der der Konuswinkel in einem Bereich von 3 - 12°, weiter bevorzugt 5 - 9° liegt,

Ferner ist in einer Ausführungsvariante erfindungsgemäß, dass das Steckelement gegenüber dem Basiselement im zusammengesteckten Zustand rotierbar ist, wobei durch eine relative Rotationsbewegung über einen Umfangswinkel von weniger als 45° die festgelegte Dichtposition lösbar ist. Die Fixiermittel werden an dem Steckelement und Basiselement so angeordnet bzw. ausgebildet, dass sie in Umfangsrichtung in einen Freiraum an dem Steckelement und Basiselement bewegbar sind, um die Steckverbindung zu lösen.

Ferner ist eine Ausführung vorteilhaft, bei der die Hakeneingriffsmittel, beispielsweise die Radialvorsprünge, in Umfangsrichtung gesehen unmittelbar angrenzend an in radialer Richtung vorstehende Verstärkungsrippen ausgebildet sind. Die Verstärkungsrippen bieten dabei eine Führungsfunktion für die Fixiermittel, beispielsweise die Haken, gegen eine ungewollte Relativrotation in eine Umfangsrichtung beim Aufstecken des Steckelements auf das Basiselement.

Auch ist eine Ausführung vorteilhaft, bei der das Basiselement einen Befestigungsflansch aufweist, um an einem Gehäuse oder dergleichen befestigt zu werden. Der Befestigungsflansch kann auch durch das Gehäuse eines Bauteils selbst gebildet sein.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: ein Ausführungsbeispiel einer erfindungsgemäßen Kabelabdichtung in einer Explosionsdarstellung;
- Fig. 2: die Kabelabdichtung aus Figur 1 im zusammengesteckten Zustand in der festgelegten Dichtposition.

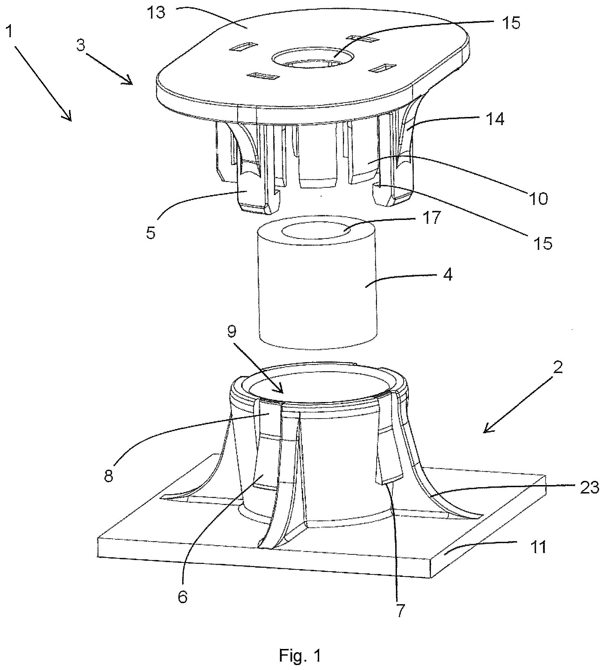

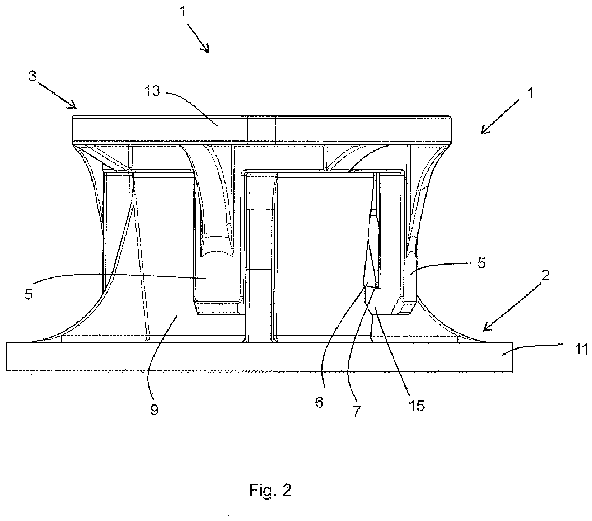

Die Figuren 1 und 2 zeigen in einer Explosions- und einer Montagedarstellung die Bauteile eines Ausführungsbeispiels der Kabelabdichtung 1 mit einem Basiselement 2, einem Steckelement 3 und einem zwischen dem Basiselement 2 und dem Steckelement 3 anordenbaren zylindrischen Dichtelement 4. Durch die Kabelabdichtung 1 verläuft in axialer Richtung eine Kabeldurchführung, wobei das durchzuführende Kabel nicht dargestellt ist. Das Steckelement 3 umfasst eine Deckplatte 13, an der für die Kabeldurchführung eine Axialöffnung 15 vorgesehen ist. An dem Befestigungsflansch 11 des Basiselements 2 ist eine entsprechende Axialöffnung zur Kabeldurchführung vorgesehen. Das zylindrische Dichtelement 4 ist elastisch und weist eine Kabeldurchführungsöffnung 17 auf, die in einen rohrförmigen Axialdurchgang übergeht.

Das Basiselement 2 umfasst die topfförmige konische Aufnahme 9, an deren Außenflächen mehrere in Umfangsrichtung beabstandete Verstärkungsstreben 23 verlaufen, die eine Abstützung der Aufnahme 9 am Befestigungsflansch 11 gewährleisten.

Am Steckelement 3 erstrecken sich als Teil des Fixiermittels in axialer Richtung Haken 5, die an ihrem jeweiligen axialen Ende eine Hakennase 15 aufweisen. Die Haken 5 sind über sich jeweils an der Deckplatte 13 abstützende Stege 14 versteift.

Jeweils in Umfangsrichtung angrenzend an die Verstärkungsstreben 23 sind an dem Basiselement 2 sich vom oberen Öffnungsrand in axialer Richtung erstreckende und radial eingesenkte Einführkanäle 8 ausgebildet, deren Breite mit denjenigen der Haken 5 korreliert. Die Einführkanäle 8 bestimmten in Umfangsrichtung gesehen die Einführposition der Haken 5 an das Basiselement 2. An die Einführkanäle 8 schließen sich in axialer Richtung unmittelbar als rampenförmige Radialvorsprünge 6 ausgebildete Hakeneingriffsmittel an, deren radiale Höhe gegenüber der Außenfläche der Aufnahme 9 in axialer Richtung gesehen stetig zunimmt. An ihrem freien Ende bilden die Radialvorsprünge 6 jeweils einen Hinterschnitt 7 zum Eingriff der jeweiligen Hakennasen 15 der Haken 5.

Das Steckelement 3 weist eine Vielzahl von an der Deckplatte 13 ausgebildeten fächerartigen Armen 10 auf, die als Pressmittel fungieren, um im zusammengesteckten Zustand gemäß Figur 2 in radialer Richtung pressend auf das Dichtelement 4 einzuwirken. Die Arme 10 verlaufen in axialer Richtung gerade auf das Basiselement 2 zu und weisen an ihren freien Enden jeweils eine schräge Phase auf. Das Dichtelement 4 passt in den von den Armen 10 in Umfangsrichtung umschlossenen Aufnahmeraum, so dass die Arme 10 bereits im unmontierten Zustand an der Außenfläche des Dichtelements 4 anliegen können.

Zur Erreichung des Montagezustands mit festgelegter Dichtposition gemäß Figur 2 wird das Dichtelement 4 von den Armen 10 des Steckelements 3 aufgenommen in die konische Aufnahme 9 des Basiselements 2 positioniert. Das Steckelement 3 wird auf das Basiselement 2 über eine ausschließlich axiale Bewegung geschoben, wobei zunächst die Haken 5 in den Einführkanälen 8 gleiten und dann elastisch radial nach außen gedrückt werden, bis sie die Hinterschnitte 7 der Radialvorsprünge 6 hintergreifen. Die Verstärkungsstreben 23 bieten ebenfalls eine seitliche Führung für die Haken 5 beim Aufstecken des Steckelements 3. Durch die axiale Bewegung des Steckelement 3 auf das Basiselement 2 werden die Arme 10 von der konischen Aufnahme 9 nach radial innen gedrückt und erzeugen eine konzentrische Flächenpressung auf das Dichtelement 4, wodurch das Dichtelement 4 gegen das Kabel verpresst wird. Die Vorspannung zum Arretieren der Haken 5 an den Radialvorsprüngen 6 wird durch die Elastizität des Dichtelements 4 und die benötige Presskraft zum Erreichen der festgelegten Dichtposition erreicht.

Der Konuswinkel der Aufnahme 9, gemessen an deren Innenwandfläche, ist im gezeigten Ausführungsbeispiel 6°. Übliche Kabeldurchmesser liegen für das gezeigte Ausführungsbeispiel bei 3 - 12mm, insbesondere 4 - 8mm.

Zum Lösen der Befestigung aus dem zusammengesteckten Zustand wird das Steckelement 3 gegenüber dem Basiselement 2 gedreht, bis die Haken 5 sich seitlich von den Hinterschnitten 7 der Radialvorsprüngen 6 lösen. Dabei ist das Lösen bereits durch eine Rotationsbewegung von 15 -45° ermöglicht. Der Bereich neben den Radialvorsprüngen 6 wird hierzu bewusst frei gehalten.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Beispielsweise können die Haken auch in eine an der Außenwand der Aufnahme vorgesehene Vertiefung eingreifen. Auch ist beispielsweise umfasst, den Befestigungsflansch des Basiselements einteilig an einem Gehäuse auszubilden.

## Patentansprüche

1. Kabelabdichtung umfassend ein Basiselement (2) und ein Steckelement (3), die zur Herstellung einer festgelegten Dichtposition zusammensteckbar sind, wobei durch das Basiselement (2) und das Steckelement (3) eine Kabeldurchführung verläuft, und umfassend zumindest ein Dichtelement (4), das ausgebildet ist, ein durch die Kabeldurchführung führbares Kabel zu umschließen, und das im zusammengesteckten Zustand zwischen dem Basiselement (2) und dem Steckelement (3) die Kabeldurchführung abdichtend angeordnet ist, wobei das Steckelement (2) und das Basiselement (3) zusammenwirkende Fixiermittel (5) aufweisen, die das Steckelement (2) und das Basiselement (3) im zusammengesteckten Zustand aneinander in der festgelegten Dichtposition arretieren, wobei die an dem Steckelement (3) und dem Basiselement (2) zusammenwirkenden Fixiermittel (5) als Verrastung oder Bajonettverschluss ausgebildet sind, **dadurch gekennzeichnet , dass** das Basiselement (2) eine konische Aufnahme (9) für das Dichtelement (4) aufweist und das Steckelement (3) ein das Dichtelement (4) umschließendes elastisches Pressmittel (10) aufweist, das ausgebildet ist, im zusammengesteckten Zustand in Wirkverbindung mit der konischen Aufnahme (9) eine konzentrische Flächenpressung auf das Dichtelement (4) auszuüben, und wobei das Steckelement (3) gegenüber dem Basiselement (2) im zusammengesteckten Zustand rotierbar ist, wobei durch eine Rotationsbewegung über einen Umfangswinkel von weniger als 45° die festgelegte Dichtposition lösbar ist.

2. Kabelabdichtung nach Anspruch 1, **dadurch gekennzeichnet, dass** das Basiselement (2) und das Steckelement (3) in der festgelegten Dichtposition in axialer Richtung aufeinander gesteckt und aneinander fixiert sind.

3. Kabelabdichtung nach Anspruch 1, **dadurch gekennzeichnet, dass** die Fixiermittel durch an dem Basiselement (2) oder dem Steckelement (3) ausgebildete Haken (5) und an dem jeweils anderen Element durch Hakeneingriffsmittel gebildet sind.

4. Kabelabdichtung nach dem vorigen Anspruch, **dadurch gekennzeichnet, dass** die Hakeneingriffsmittel durch Radialvorsprünge (6) gebildet sind, die jeweils einen Hinterschnitt (7) zum Eingriff der jeweiligen Haken aufweisen.

5. Kabelabdichtung nach dem vorigen Anspruch, **dadurch gekennzeichnet, dass** die Radialvorsprünge (6) rampenförmig ausgebildet sind.

6. Kabelabdichtung nach zumindest einem der vorigen Ansprüche, **dadurch gekennzeichnet, dass** an dem Basiselement (2) eingesenkte Einführkanäle (8) ausgebildet sind, die eine positionsfeste Führung beim Zusammenstecken von Steckelement (3) und Basiselement (2) erzeugen.

7. Kabelabdichtung nach zumindest einem der vorigen Ansprüche, **dadurch gekennzeichnet, dass** das Dichtelement (4) eine Kabeldurchführungsöffnung (17) aufweist und im zusammengesteckten Zustand von Basiselement (2) und Steckelement (3) in radialer Richtung elastisch verpressbar ist.

8. Kabelabdichtung nach dem vorigen Anspruch, **dadurch gekennzeichnet, dass** das Pressmittel als elastisch in radialer Richtung bewegliche Arme (10) ausgebildet ist, die das Dichtelement (4) zumindest abschnittsweise umgreifen und im zusammengesteckten Zustand die konzentrische Flächenpressung erzeugen.

9. Kabelabdichtung nach zumindest einem der vorigen Ansprüche, **dadurch gekennzeichnet, dass** die konische Aufnahme (9) einen Konuswinkel von 3 - 12° aufweist.

10. Kabelabdichtung nach zumindest einem der vorigen Ansprüche 6 bis 12, **dadurch gekennzeichnet, dass** die Hakeneingriffsmittel in Umfangsrichtung gesehen unmittelbar angrenzend an in radialer Richtung vorstehende Verstärkungsrippen (23) ausgebildet sind.

11. Kabelabdichtung nach zumindest einem der vorigen Ansprüche, **dadurch gekennzeichnet, dass** das Basiselement (2) einen Befestigungsflansch (11) aufweist.

12. Verwendung der Kabelabdichtung nach einem der vorigen Ansprüche an einem Elektronikgehäuse eines Elektromotors.

## Claims

1. Cable seal comprising a base element (2) and a plug element (3) which can be plugged together to produce a predetermined sealing position, wherein a cable bushing extends through the base element (2) and the plug element (3), and comprising at least one sealing element (4) which is formed to enclose a cable which can be guided through the cable bushing, and which, in the assembled state, is sealingly arranged between the base element (2) and the plug element (3), wherein the plug element (2) and the base element (3) have interacting fixing means (5), which arrest the plug element (2) and the base element (3) in the plugged-together state against one another in the predetermined sealing position, wherein the fixing means (5) interacting on the plug element (3) and the base element (2) are formed as a latching or bayonet catch, **characterized in that** the base element (2) has a conical receptacle (9) for the sealing element (4) and the plug element (3) has an elastic pressing means (10) which surrounds the sealing element (4) and is formed to exert a concentric surface pressure on the sealing element (4) in the plugged-together state in operative connection with the conical receptacle (9), and wherein the plug element (3) is rotatable relative to the base element (2) in the assembled state, wherein the predetermined sealing position is releasable by a rotational movement over a circumferential angle of less than 45°.

2. Cable seal according to claim 1, **characterized in that** the base element (2) and the plug element (3) are plugged onto one another and fixed to one another in the predetermined sealing position in the axial direction.

3. Cable seal according to claim 1, **characterized in that** the fixing means are formed by hooks (5) formed on the base element (2) or the plug element (3) and on the respective other element by hook engagement means.

4. Cable seal according to the previous claim, **characterized in that** the hook engagement means are formed by radial projections (6) each having an undercut (7) for engaging the respective hooks.

5. Cable seal according to the previous claim, **characterized in that** the radial projections (6) are formed ramp-shaped.

6. Cable seal according to at least one of the preceding claims, **characterized in that** recessed insertion channels (8) are formed on the base element (2), which form a positionally fixed guide when the plug element (3) and base element (2) are plugged together.

7. Cable sealing according to at least one of the preceding claims, **characterized in that** the sealing element (4) has a cable bushing opening (17) and, in the plugged-together state of the base element (2) and the plug element (3), is elastically compressible in the radial direction.

8. Cable seal according to the previous claim, **characterized in that** the pressing means is formed as elastically arms (10) movable in the radial direction, which enclose the sealing element (4) at least in sections and form the concentric surface pressure in the plugged-together state.

9. Cable seal according to at least one of the previous claims, **characterized in that** the conical receptacle (9) has a cone angle of 3 - 12°.

10. Cable seal according to at least one of the preceding claims 6 to 12, **characterized in that** the hook engagement means are formed immediately adjacent to radially projecting reinforcing ribs (23) viewed in the circumferential direction.

11. Cable seal according to at least one of the preceding claims, **characterized in that** the base element (2) has a fixing flange (11).

12. Use of the cable seal according to one of the preceding claims on an electronics housing of an electric motor.

## Revendications

1. Garniture d'étanchéité de câble comprenant un élément de base (2) et un élément d'enfichage (3), qui peuvent être enfichés l'un dans l'autre pour la réalisation d'une position d'étanchéité définie, dans laquelle un passage de câble s'étend à travers l'élément de base (2) et l'élément d'enfichage (3), et comprenant au moins un élément d'étanchéité (4), qui est réalisé pour enfermer un câble pouvant être guidé par le passage de câble, et qui à l'état enfiché le passage de câble est agencé de manière étanche entre l'élément de base (2) et l'élément d'enfichage (3), dans laquelle l'élément d'enfichage (2) et l'élément de base (3) présentent des moyens de fixation (5) coopérant, qui bloquent l'élément d'enfichage (2) et l'élément de base (3) à l'état enfiché l'un contre l'autre dans la position d'étanchéité définie, dans laquelle les moyens de fixation (5) coopérant au niveau de l'élément d'enfichage (3) et de l'élément de base (2) sont réalisés en tant que crantage ou fermeture à baïonnette, **caractérisée en ce que** l'élément de base (2) présente un logement conique (9) pour l'élément d'étanchéité (4) et l'élément d'enfichage (3) présente un moyen de pression élastique (10) enfermant l'élément d'étanchéité (4), qui est réalisé pour exercer à l'état enfiché en liaison active avec le logement conique (9) une pression superficielle concentrique sur l'élément d'étanchéité (4), et dans laquelle l'élément d'enfichage (3) peut tourner par rapport à l'élément de base (2) à l'état enfiché, dans laquelle la position d'étanchéité définie peut être desserrée par un mouvement de rotation sur un angle circonférentiel de moins de 45°.

2. Garniture d'étanchéité de câble selon la revendication 1, **caractérisée en ce que** l'élément de base (2) et l'élément d'enfichage (3) dans la position d'étanchéité définie dans la direction axiale sont enfichés l'un sur l'autre et fixés l'un à l'autre.

3. Garniture d'étanchéité de câble selon la revendication 1, **caractérisée en ce que** les moyens de fixation sont formés par des crochets (5) formés au niveau de l'élément de base (2) et de l'élément d'enfichage (3) et au niveau de respectivement l'autre élément par un moyen de préhension de crochet.

4. Garniture d'étanchéité de câble selon la revendication précédente, **caractérisée en ce que** les moyens de préhension de crochet sont formés par des saillies radiales (6), qui présentent respectivement une contre-découpe (7) pour la préhension des crochets respectifs.

5. Garniture d'étanchéité de câble selon la revendication précédente, **caractérisée en ce que** les saillies radiales (6) sont réalisées en forme de rampe.

6. Garniture d'étanchéité de câble selon au moins l'une quelconque des revendications précédentes, **caractérisée en ce que** des canaux d'introduction (8) enfoncés sont réalisés au niveau de l'élément de base (2), qui génèrent un guidage fixe en position lors de l'enfichage de l'élément d'enfichage (3) et de l'élément de base (2).

7. Garniture d'étanchéité de câble selon au moins l'une quelconque des revendications précédentes, **caractérisée en ce que** l'élément d'étanchéité (4) présente une ouverture de passage de câble (17) et à l'état enfiché de l'élément de base (2) et de l'élément d'enfichage (3) peut être compressé élastiquement dans la direction radiale.

8. Garniture d'étanchéité de câble selon la revendication précédente, **caractérisée en ce que** le moyen de pression est réalisé en tant que bras (10) élastiquement mobiles dans la direction radiale, qui entourent l'élément d'étanchéité (4) au moins par section et génèrent la pression superficielle concentrique à l'état enfiché.

9. Garniture d'étanchéité de câble selon au moins l'une quelconque des revendications précédentes, **caractérisée en ce que** le logement conique (9) présente un angle de cône de 3 - 12°.

10. Garniture d'étanchéité de câble selon au moins l'une quelconque des revendications précédentes 6 à 12, **caractérisée en ce que** les moyens de préhension de crochet sont réalisés vu dans la direction circonférentielle de manière directement adjacente aux nervures de renforcement (23) en saillie dans la direction radiale.

11. Garniture d'étanchéité de câble selon au moins l'une quelconque des revendications précédentes, **caractérisée en ce que** l'élément de base (2) présente une bride de fixation (11).

12. utilisation de la garniture d'étanchéité de câble selon l'une quelconque des revendications précédentes au niveau d'un carter électronique d'un moteur électrique.
